# EUROPÄISCHE PATENTANMELDUNG

(11) **EP 4 411 327 A1**
(43) Veröffentlichungstag der Anmeldung: **07.08.2024**
(21) Anmeldenummer: 24150547.8
(22) Anmeldetag: 05.01.2024
(51) Int. Cl.: G01F 1/66, F17D 1/04, F23N 5/16, G01F 1/667, G01F 15/00, G01F 15/12, G01F 25/10, G01H 3/12, G01L 11/04, G01L 27/00, G01M 3/24, G01N 29/032, G01N 29/14, G01N 29/32, G01N 29/44, G01S 15/00, G05D 7/00, G05D 16/00

(54) **VERFAHREN ZUR ÜBERWACHUNG EINER GASDRUCKREGEL- UND MESSANLAGE**

(30) Priorität: 12.01.2023 DE 102023100661
(71) Anmelder: Westnetz GmbH, 44139 Dortmund (DE)
(72) Erfinder: Ewering, Dietmar, 48565 Steinfurt (DE); Penczek, Torben, 45772 Marl (DE); Peters, Klaus, 46483 Wesel (DE)
(74) Vertreter: Bals & Vogel Patentanwälte PartGmbB

(57) **Zusammenfassung**

Die Erfindung betrifft ein Verfahren zur Überwachung einer Gasdruckregel- und Messanlage (2), umfassend die Schritte eines Erfassens (100) von akustischen Daten der Gasdruckregel- und Messanlage (2) mittels einer Sensoreinheit (20), eines Vergleichens (200) der erfassten akustischen Daten mit gespeicherten akustischen Daten einer Gasdruckregel- und Messanlage (2) mittels einer Verarbeitungseinheit (22) sowie eines Bestimmens (300) eines aktuellen Zustandes der Gasdruckregel- und Messanlage (2) auf Basis des Vergleiches mittels der Verarbeitungseinheit (22).

## Beschreibung

Die vorliegende Erfindung betrifft ein Verfahren und ein System zur Überwachung einer Gasdruckregel- und Messanlage sowie eine Gasdruckregel- und Messanlage, aufweisend ein derartiges System.

Gasdruckregel- und Messanlagen sowie Verfahren und Systeme zum Betreiben von Gasdruckregel- und Messanlagen sind aus dem Stand der Technik bekannt. Zur Gewährleistung eines sicheren und nachhaltigen Betriebs existieren gesetzliche Vorgaben zur Planung, Errichtung und des Betriebs solcher Anlagen. Nachteiliger Weise ist ein Betrieb der bekannten Gasdruckregel- und Messanlagen unter den gesetzlichen Vorgaben sehr aufwändig und kostenintensiv.

Es ist daher die Aufgabe der vorliegenden Erfindung, die voranstehend genannten Nachteile bekannter Gasdruckregel- und Messanlagen sowie Verfahren und Systeme zum Betreiben von Gasdruckregel- und Messanlagen zumindest teilweise zu beheben. Insbesondere ist es die Aufgabe der Erfindung, ein Verfahren sowie ein System zum Betreiben einer Gasdruckregel- und Messanlage zur Verfügung zu stellen, das einen sicheren und nachhaltigen und zugleich unaufwändigen und kostengünstigen Betrieb einer Gasdruckregel- und Messanlage gewährleistet.

Die voranstehende Aufgabe wird gelöst durch ein Verfahren mit den Merkmalen des Anspruchs 1, ein System gemäß Anspruch 10 sowie eine Gasdruckregel- und Messanlage gemäß Anspruch 12. Weitere Merkmale und Details der Erfindung ergeben sich aus den Unteransprüchen, der Beschreibung und den Zeichnungen. Technische Merkmale, die zu dem erfindungsgemäßen Verfahren offenbart werden, gelten dabei auch in Verbindung mit dem erfindungsgemäßen System sowie der erfindungsgemäßen Gasdruckregel- und Messanlage und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Erfindungsgemäß ist ein Verfahren zur Überwachung einer Gasdruckregel- und Messanlage vorgesehen. Das erfindungsgemäße Verfahren umfasst hierbei die Schritte eines Erfassens von akustischen Daten der Gasdruckregel- und Messanlage mittels einer Sensoreinheit, eines Vergleichens der erfassten akustischen Daten mit gespeicherten akustischen Daten einer Gasdruckregel- und Messanlage mittels einer Verarbeitungseinheit sowie eines Bestimmens eines aktuellen Zustandes der Gasdruckregel- und Messanlage auf Basis des Vergleiches mittels der Verarbeitungseinheit.

Unter einer Gasdruckregel- und Messanlage kann im Rahmen der Erfindung insbesondere eine Anlage verstanden werden, die zur Gasversorgung eingesetzt wird bzw. werden kann und ein Gas transportiert und/oder gezielt verteilt. Es versteht sich jedoch, dass das gegenständliche Verfahren auch zur Überwachung artverwandter Anlagen, insbesondere für Anlagen zum Transport von Fluiden oder Anlagen zur Energieversorgung, eingesetzt werden kann. Unter akustischen Daten der Gasdruckregel- und Messanlage können im Rahmen der Erfindung insbesondere mechanische Schwingungen und Wellen verstanden werden, die von der Gasdruckregel- und Messanlage verursacht werden, bspw. durch den Betrieb von Verdichtern oder Pumpen, durch den Fluss eines transportierten Gases, durch das Öffnen und Schließen von Ventilen oder dergleichen. Die Frequenz kann hierbei insbesondere den Schallbereich abdecken. Vorteilhafterweise können aber auch darüber- sowie darunterliegende Frequenzen erfasst werden. Der Vergleich der erfassten akustischen Daten kann mit gespeicherten akustischen Daten derselben Gasdruckregel- und Messanlage oder auch anderen Gasdruckregel- und Messanlagen erfolgen, die dabei als eine akustische Norm fungieren können. Ein aktueller Zustand der Gasdruckregel- und Messanlage kann insbesondere im Hinblick auf einen sicheren Betrieb bestimmt werden, bspw. hinsichtlich der Dichtigkeit eines Leitungssystems oder dergleichen. Ebenso kann ein aktueller Zustand auch im Hinblick auf die Zuverlässigkeit von Komponenten der Gasdruckregel- und Messanlage oder im Hinblick auf die Exaktheit einer verteilten Gasmenge bestimmt werden. Es versteht sich zudem, dass eine Sensoreinheit sowie eine Verarbeitungseinheit auch in Form einer gemeinsamen Kontrolleinheit oder dergleichen ausgebildet sein können oder auch weitere zusätzliche Einheiten zur Ausführung der erfindungsgemäßen Verfahrensschritte vorgesehen sein können.

Im Rahmen der Erfindung ist erkannt worden, dass bereits über einen reinen Vergleich von akustischen Daten einer Gasdruckregel- und Messanlage mit gespeicherten akustischen Daten einer Gasdruckregel- und Messanlage ein aktueller Zustand einer Gasdruckregel- und Messanlage derart zuverlässig bestimmt werden kann, dass die Anzahl von vorgeschriebenen Wartungen vor Ort auf ein Minimum reduziert werden kann und diese bestenfalls nur bei Bestimmen eines schlechten aktuellen Zustands durchzuführen sind. Dies reduziert den Aufwand zum Betrieb der Gasdruckregel- und Messanlagen und spart Kosten ein, ohne die Betriebssicherheit zu mindern.

Im Rahmen einer einfachen, schnellen und gleichzeitig zuverlässigen Überwachung einer Gasdruckregel- und Messanlage kann erfindungsgemäß vorteilhafterweise vorgesehen sein, dass die akustischen Daten mechanische Schwingungen im Schallbereich, insbesondere Raumschalldaten und/oder Körperschalldaten umfassen. Unter mechanischen Schwingungen im Schallbereich können insbesondere Schwingungen in einer Frequenz von ca. 16 Hz bis 20 kHz verstanden werden. Unter Raumschalldaten können dabei vorzugsweise die in einem geschlossenen Raum erfassbaren Schwingungen verstanden werden, die über ein Gas oder eine Flüssigkeit transportiert werden und bspw. bereits Reflexionen erfahren haben. Unter Körperschalldaten können dagegen vorzugsweise mechanische Schwingungen im Schallbereich verstanden werden, die sich in einem festen Körper ausbreiten.

Im Hinblick auf eine besonders exakte Bestimmung eines aktuellen Zustandes einer Gasdruckregel- und Messanlage kann gegenständlich vorteilhafterweise vorgesehen sein, dass die erfassten akustischen Daten vor einem Vergleichen mit gespeicherten akustischen Daten bearbeitet werden, wobei die Datenbearbeitung vorzugsweise zumindest ein Mitteln und/oder Gewichten der erfassten akustischen Daten umfasst. Alternativ oder kumulativ zu einem Mitteln und/oder Gewichten können auch komplexere Datenauswertungsmethoden angewandt werden.

Im Rahmen einer schnellen und unaufwändigen aber dennoch aussagekräftigen Bestimmung eines aktuellen Zustandes einer Gasdruckregel- und Messanlage kann erfindungsgemäß vorteilhafterweise ferner vorgesehen sein, dass das Vergleichen der erfassten akustischen Daten mit gespeicherten akustischen Daten innerhalb eines ausgewählten spezifischen Frequenzbereichs erfolgt, wobei der spezifische Frequenzbereich vorzugsweise auf Basis individueller Eigenschaften der Gasdruckregel- und Messanlage ausgewählt wird. So können bspw. bestimmte Frequenzbereiche besonders aussagekräftig für eine Bestimmung eines aktuellen Zustandes einer Gasdruckregel- und Messanlage sein, insbesondere im Hinblick auf das Erkennen spezifischer Fehler.

Um sowohl eine besonders exakte Bestimmung eines aktuellen Zustands als auch ein vereinfachtes Auffinden einer Fehlerursache zu ermöglichen, ist es ferner denkbar, dass das Erfassen von akustischen Daten der Gasdruckregel- und Messanlage auf bestimmte Bereiche der Gasdruckregel- und Messanlage beschränkt wird. So kann bspw., wenn eine Abweichung zwischen erfassten akustischen Daten und gespeicherten akustischen Daten einer Gasdruckregel- und Messanlage erkannt wird, sukzessive ein Vergleich von akustischen Daten vorgesehen sein, der auf bestimmte Bereiche einer Gasdruckregel- und Messanlage beschränkt ist, um mögliche Fehler einzugrenzen.

Im Rahmen einer einfachen, schnellen und zuverlässigen Bestimmung eines aktuellen Zustands einer Gasdruckregel- und Messanlage kann ferner vorgesehen sein, dass aus den erfassten akustischen Daten ein Klangbild der Gasdruckregel- und Messanlage erstellt wird, das mit einem gespeicherten Klangbild derselben Gasdruckregel- und Messanlage verglichen wird. Unter einem Klangbild kann hierbei insbesondere eine Auftragung von erfassten akustischen Signalen über eine bestimmte Frequenz verstanden werden (Intensität der akustischen Signale gegen die Frequenz). Alternativ zu einem Vergleich mit gespeicherten Klangbildern derselben Gasdruckregel- und Messanlage kann auch ein Vergleich mit gespeicherten Normklangbildern vorgesehen sein. Es versteht sich, dass entsprechend auch Klangbilder von bestimmten Bereichen der Gasdruckregel- und Messanlage erstellt und mit entsprechenden Klangbildern von bestimmten Bereichen der Gasdruckregel- und Messanlage bzw. entsprechenden Normklangbildern verglichen werden können.

Um die Aussagekraft des gegenständlichen Verfahrens weiter zu erhöhen, ist es ferner denkbar, dass das Verfahren in Kombination mit der Erfassung und Bewertung von Standardparametern durchgeführt wird, wobei das Verfahren vorzugsweise bei einem Erkennen einer Abweichung eines Standardparameters von einem Sollwert initiiert wird.

Als geeignete Standardparameter bieten sich hierbei vorteilhafterweise die folgenden Parameter an:
- ein Eingangsdruck eines Gases,
- ein Eingangsbrennwert eines Gases,
- eine Eingangstemperatur eines Gases,
- ein Odometriermittelgehalt eines Gases,
- eine Strömungsgeschwindigkeit eines Gases,
- eine Strömungsart eines Gases,
- ein Feuchtegehalt eines Gases
- eine Schallabstrahlung eines Gases.

Für eine exakte Bestimmung eines aktuellen Zustands sowie ein vereinfachtes Auffinden einer Fehlerursache ist es ferner denkbar, dass eine Beschränkung auf bestimmte Bereiche der Gasdruckregel- und Messanlage in Abhängigkeit einer Abweichung eines Standardparameters von einem Sollwert erfolgt, wobei anhand der Abweichung des Standardparameters von einem Sollwert vorab ein zu überwachender Bereich der Gasdruckregel- und Messanlage bestimmt wird. So kann bspw., wenn ein Abweichen eines Eingangsdrucks registriert wird, ein Erfassen von akustischen Daten einer Gasdruckregel- und Messanlage und ein Vergleichen der Daten auf den Druckbehälter zur Speicherung des Gases beschränkt sein.

Um die Aussagekraft des gegenständlichen Verfahrens weiter zu erhöhen und den Auswertungsaufwand zu minimieren, ist es ferner denkbar, dass das Bestimmen eines aktuellen Zustandes der Gasdruckregel- und Messanlage die Verwendung von künstlicher Intelligenz umfasst. Unter künstlicher Intelligenz kann im Rahmen der Erfindung insbesondere verstanden werden, jene Bestandteile und Komponenten, die die menschliche Intelligenz ausmachen und prägen, zumindest teilweise auf Maschinen zu übertragen. Im Rahmen der Verwendung von künstlicher Intelligenz kann hierbei bspw. vorgesehen sein, dass das Bestimmen eines aktuellen Zustandes der Gasdruckregel- und Messanlage die Verwendung von künstlicher Intelligenz umfasst. Im Rahmen eines auf einfache und kostengünstige Weise durchführbaren Verfahrens zur Überwachung einer Gasdruckregel- und Messanlage kann gegenständlich vorteilhafterweise vorgesehen sein, dass das erfindungsgemäße Verfahren selbstlernend durchgeführt wird. Hierbei kann das erfindungsgemäße Verfahren vorteilhafterweise unter Verwendung künstlicher Intelligenz, vorzugsweise auf Basis neuronaler Netze ausgeführt werden.

Im Rahmen eines besonders einfach ausführbaren Verfahrens zur zuverlässigen Bestimmung eines aktuellen Zustands einer Gasdruckregel- und Messanlage kann gegenständlich ferner vorgesehen sein, dass die akustischen Daten über eine Glasfaserleitung und/oder eine Glas in Gas-Messsensorik erfasst werden, wobei die Glasfaserleitung vorzugsweise als Kommunikationsleitung der Gasdruckregel- und Messanlage dient. Im Rahmen der Erfindung ist dabei erkannt worden, dass akustische Daten bzw. Klangbilder einer Gasdruckregel- und Messanlage besonders empfindlich über eine Glasfaserleitung detektiert werden können, an die die akustischen Daten bzw. die Klangbilder weitergegeben werden.

Im Hinblick auf eine einfache, kostengünstige und zugleich zuverlässige Überwachung einer Gasdruckregel- und Messanlage kann gegenständlich vorteilhafterweise vorgesehen sein, dass die Erfassung von akustischen Daten der Gasdruckregel- und Messanlage an einem Filter der Gasdruckregel- und Messanlage erfolgt, wobei die Erfassung von akustischen Daten vorzugsweise gemeinsam mit der Erfassung und Bewertung von Standardparametern an dem Filter der Gasdruckregel- und Messanlage erfolgt, wobei als Standardparameter insbesondere einer oder mehrere der folgenden Parameter erfasst und bewertet werden:
- ein Gewicht des Filters,
- eine Druckdifferenz zwischen einem Filtereingang und einem Filterausgang,
- eine Verformung von Filtermaterial,
- eine Feuchtigkeit am Ausgang des Filters.

Im Rahmen der Erfindung ist hierbei erkannt worden, dass der oder die Filter einer Gasdruckregel- und Messanlage eine besonders aussagekräftige Messposition zur Bestimmung eines aktuellen Zustandes einer Gasdruckregel- und Messanlage darstellen.

Eine Verformung der verwendeten Filtermaterialen wie Filtermatten, Filterpatronen und dergleichen kann vorzugsweise mit einer geeigneten Sensorik (z. B. Dehnungsmessstreifen) überwacht werden. Neben einer Erfassung einer Druckdifferenz zur Überwachung der Filterbelastung kann zudem bspw. aus der Staubbelastung und weiteren möglichen Verunreinigungen (u. a. auch aus der Feuchte) durch Gewichtszunahme der genaue Zeitpunkt für einen notwendigen Filtermaterialwechsel abgeleitet werden. Über die gezielte Anordnung der Sensoreinheit bzw. von Schwingungs- und/ oder Geräuschsensoren der Sensoreinheit an einem Filter kann somit ein etwaiger Durchschlag (Filtermaterialdurchbruch) sicher detektiert werden.

Im Hinblick auf eine einfache, kostengünstige und zugleich zuverlässige Überwachung einer Gasdruckregel- und Messanlage kann gegenständlich vorteilhafterweise vorgesehen sein, dass die Erfassung von akustischen Daten der Gasdruckregel- und Messanlage an einem Regelgerät der Gasdruckregel- und Messanlage erfolgt, wobei die Erfassung von akustischen Daten vorzugsweise gemeinsam mit der Erfassung und Bewertung von Standardparametern an dem Regelgerät der Gasdruckregel- und Messanlage erfolgt, wobei als Standardparameter insbesondere einer oder mehrere der folgenden Parameter erfasst und bewertet werden:
- ein Körperschall,
- ein Druckstoß oder Druckabfall,
- eine Membranschwingung,
- eine Membranbewegung,
- ein Hilfsdruck.

Im Rahmen der Erfindung ist hierbei erkannt worden, dass das oder die Regelgeräte einer Gasdruckregel- und Messanlage eine besonders aussagekräftige Messposition zur Bestimmung eines aktuellen Zustandes einer Gasdruckregel- und Messanlage darstellen. Regelgeräte in der Gasversorgung können bei großen Druckdifferenzen zwischen Eingangs- und Ausgangsdruck auch mit Hilfsdruckreglern oder in sehr großen Gasdruckregel- und Messanlagen auch mittels gesteuerten Stellantrieben betrieben werden. Mittels der Erfassung eines Körperschalls, bspw. über Schwingungs- und Geräuschsensoren, von Druckstößen und/oder Druckabfällen über zusätzliche (Druck-)Sensoren sowie einer Membranschwingung oder -bewegung mittels geeigneter Sensorik kann eine Gasdruckregel- und Messanlage somit sehr effektiv und zuverlässig überwacht werden.

Um nach einer Analyse des aktuellen Zustandes der Gasdruckregel- und Messanlage ohne Monteureinsatz einen Betriebseingriff in die Gasdruckregel- und Messanlage zu ermöglichen, kann gegenständlich vorteilhafterweise vorgesehen sein, dass ein Ansteuern der Gasdruckregel- und Messanlage auf Basis des bestimmten aktuellen Zustandes der Gasdruckregel- und Messanlage mittels einer Steuereinheit vorgesehen ist, wobei das Ansteuern vorzugsweise ein Betätigen einer Rückstellvorrichtung zur Zurückstellung eines Sicherheitsabsperrventils aus der Ferne umfasst. Je nach Druckdifferenz zwischen Eingangs- und Ausgangsdruck können in den Regelanlagen ein oder zwei Sicherheitsabsperrventile zur Absicherung einer Drucküberschreitung im Ausgangsnetz zum Einsatz kommen. Entsprechend der eingestellten Druckstaffelung können das Sicherheitsabsperrventil oder die Sicherheitsabsperrventile bei Überschreitung des Werts für den maximalen Ausgangsdruck sowie bei Unterschreitung eines minimalen Ausgangsdrucks geschlossen werden. Durch das erfindungsgemäß vorteilhafterweise vorgesehene Ansteuern einer Rückstellvorrichtung können das oder die Sicherheitsabsperrventile aus der Ferne (z. B. durch die Lastwarte) zurückgestellt werden, ohne dass ein Mitarbeiter ausfahren muss. Die Rückstellung kann vorzugsweise nach vorheriger sorgfältiger Analyse des Gesamtzustandes der Anlage und der intelligenten Auswertung erfolgen.

Es versteht sich in Bezug auf das erfindungsgemäße Verfahren, dass einzelne, mehrere oder alle obligatorischen und/oder optionalen Schritte des erfindungsgemäßen Verfahrens in der vorgeschlagenen Reihenfolge, aber auch abweichend von der vorgeschlagenen Reihenfolge ausgeführt werden können. Hierbei können einzelne, mehrere oder alle obligatorischen und/oder optionalen Schritte des erfindungsgemäßen Verfahrens insbesondere wiederholt, bspw. zyklisch wiederholt ausgeführt werden. Es versteht sich ferner, dass einzelne, mehrere oder alle der obligatorischen und optionalen Schritte des erfindungsgemäßen Verfahrens gegenständlich auch zumindest teilweise automatisch bzw. automatisiert ausgeführt werden können, insbesondere durch einen Computer implementiert werden können.

Ebenfalls Gegenstand der Erfindung ist ferner ein System zur Überwachung einer Gasdruckregel- und Messanlage, insbesondere zur Ausführung eines voranstehend beschriebenen Verfahrens. Hierbei umfasst das System eine Sensoreinheit zur Erfassung von akustischen Daten der Gasdruckregel- und Messanlage, eine Verarbeitungseinheit zum Vergleichen der erfassten akustischen Daten mit gespeicherten akustischen Daten einer Gasdruckregel- und Messanlage und zur Bestimmung eines aktuellen Zustandes der Gasdruckregel- und Messanlage auf Basis des Vergleiches. Damit weist das erfindungsgemäße System die gleichen Merkmale auf, wie sie bereits ausführlich in Bezug auf das erfindungsgemäße Verfahren beschrieben worden sind. Die gegenständliche Sensoreinheit kann insbesondere als Schwingungssensoreinheit ausgebildet sein bzw. eine Mehrzahl von Schwingungssensoren umfassen. Ferner kann die Sensoreinheit eine Glas in Gas-Messsensorik zur Erfassung der akustischen Daten aufweisen.

Um die Aussagekraft des gegenständlichen Systems zu erhöhen, ist es denkbar, dass die Sensoreinheit zusätzlich zur Erfassung und Bewertung von Standardparametern eingerichtet ist.

Um nach einer Analyse des aktuellen Zustandes der Gasdruckregel- und Messanlage eine Behebung von Fehlern vorzunehmen bzw. Gefahrenpotentiale zu minimieren, kann es ebenfalls von Vorteil sein, wenn eine Steuereinheit zur Ansteuerung der Gasdruckregel- und Messanlage auf Basis des bestimmten aktuellen Zustandes der Gasdruckregel- und Messanlage vorgesehen ist.

Ebenfalls Gegenstand der Erfindung ist ferner eine Gasdruckregel- und Messanlage, aufweisend ein voranstehend beschriebenes System. Damit weist die erfindungsgemäße Gasdruckregel- und Messanlage die gleichen Merkmale auf, wie sie bereits ausführlich in Bezug auf das erfindungsgemäße Verfahren bzw. das erfindungsgemäße System beschrieben worden sind.

Im Rahmen einer einfachen und zuverlässigen Bestimmung eines aktuellen Zustands einer Gasdruckregel- und Messanlage kann gegenständlich ferner vorgesehen sein, dass eine Kommunikationsleitung zur Ausführung einer Kommunikation vorgesehen ist, wobei die Sensoreinheit vorzugsweise an der Kommunikationsleitung angeordnet ist, wobei die Kommunikationsleitung insbesondere in Form einer Glasfaserleitung ausgebildet ist. Im Rahmen der Erfindung ist dabei erkannt worden, dass akustische Daten bzw. Klangbilder einer Gasdruckregel- und Messanlage besonders empfindlich über eine Glasfaserleitung detektiert werden können, an die die akustischen Daten bzw. die Klangbilder weitergegeben werden.

Um nach einer Analyse des aktuellen Zustandes der Gasdruckregel- und Messanlage eine autonome Rückstellung eines Sicherheitsabsperrventils ohne Monteureinsatz zu ermöglichen, kann gegenständlich vorteilhafterweise vorgesehen sein, dass zumindest ein Sicherheitsabsperrventil zur Sperrung eines Gasflusses und eine Rückstellvorrichtung zur Ansteuerung des zumindest einen Sicherheitsabsperrventils aus der Ferne vorgesehen ist, wobei die Steuereinheit vorzugsweise mit der Rückstellvorrichtung in Kommunikationsverbindung steht.

Im Hinblick auf einen möglichst schonenden Betrieb einer Gasdruckregel- und Messanlage kann es ferner von Vorteil sein, wenn eine Vorwärmanlage zur Vorwärmung eines Gases vorgesehen ist, wobei die Sensoreinheit vorzugsweise an der Vorwärmanlage angeordnet ist und/oder die Steuereinheit mit der Vorwärmanlage in Kommunikationsverbindung steht. Um den Verbrauch der Vorwärmung zu minimieren, kann die Vorwärmanlage vorteilhafterweise zusätzlich mit einer Eingangs- und Ausgangstemperaturüberwachung ausgestattet sein, sodass die minimal notwendige Energiemenge zur Kompensation des Joule-Thompson-Effekts ermittelt und an die Wärmebereitstellung übermittelt werden kann und eine kontinuierliche Anpassung des Volumenstroms möglich ist. Des Weiteren kann vorgesehen sein, die Vorwärmanlage insbesondere mit einer Sensoreinheit zur Erfassung von Körperschall auszustatten, um etwaige Verschleißgrenzen (Rohrbündel etc.) rechtzeitig erkennen zu können. Zusätzlich kann bspw. das Gewicht des Vorwärmers zur Kontrolle der Abtragungsrate am Rohrbündel überwacht werden. Im Hinblick auf den Betrieb einer Vorwärmanlage können insbesondere folgende Größen überwacht werden: die Vorlauftemperatur/Rücklauftemperatur des Heizkreislaufs, die Gastemperatur im Vorwärmer, die Temperatur der Rohrbündelleitungen, die Abgasmessungen am Wärmeerzeuger (insbesondere zur Ermittlung des GWP des CO₂,NOₓ), der Energieverbrauch (Zähler vor Wärmeverbraucher), die Nutzwärmeenergie, das Gewicht des Vorwärmers.

Im Rahmen eines möglichst flexiblen Betriebs einer Gasdruckregel- und Messanlage kann es ebenfalls von Vorteil sein, wenn Schleusen zur Einführung von Mikrorobotern zur Reinigung oder zur Einführung von Sensoren vorgesehen sind. Im Rahmen eines möglichst komfortablen und flexiblen Betriebs der Gasdruckregel- und Messanlage kann zudem eine Verwendung von Kugelhähnen bzw. Schiebern und Schiebermotoren bzw. Stellantrieben vorgesehen sein. So können bspw. alle notwendigen Armaturen mit Stellantrieben ausgestattet sein, um diese ferngesteuert bedienen zu können. Die Stellantriebe können an Eingangs- und Ausgangs- sowie Umgangsarmaturen, aber auch an Regelgeräten (bspw. zur Änderung der Sollwerte des Ausgangsdruckes) angeordnet sein und hinsichtlich ihrer Stellungsposition überwacht werden. Des Weiteren können die Stellantriebe genutzt werden, um Sollwerte anzupassen und die Anlage gasströmungstechnisch und geräuschtechnisch zu steuern (z. B. über einen Einsatz von Stellantrieben an entsprechenden Verschleißarmaturen). Die notwendigen Absperrorgane können zudem hinsichtlich ihrer Durchströmung optimiert sein, sodass die Geräusch- und/oder Schwingungsemission verringert wird.

Im Hinblick auf eine einfache, kostengünstige und zugleich zuverlässige Überwachung einer Gasdruckregel- und Messanlage kann gegenständlich vorteilhafterweise vorgesehen sein, dass ein Filter zur Filterung eines Gases und/oder Regelgeräte zur Regelung eines Gasflusses vorgesehen sind, wobei die Sensoreinheit vorzugsweise an dem Filter und/oder den Regelgeräten angeordnet ist. Im Rahmen der Erfindung ist hierbei erkannt worden, dass der oder die Filter und das oder die Regelgeräte einer Gasdruckregel- und Messanlage eine besonders aussagekräftige Messposition zur Bestimmung eines aktuellen Zustandes einer Gasdruckregel- und Messanlage darstellen.

Im Hinblick auf einen umweltfreundlichen Betrieb kann vorteilhafterweise ferner vorgesehen sein, dass zumindest eine Wasserstoff-Einspeisstelle vorgesehen ist, wobei die Sensoreinheit und/oder die Steuereinheit vorzugsweise an der Wasserstoff-Einspeisstelle angeordnet ist. Die Wasserstoff-Einspeisstelle kann dabei vorzugsweise hinsichtlich ihrer Aktivität (auf/zu) und/oder hinsichtlich der Menge (Qn) und/oder des Odoriermittelgehaltes überwacht werden. Über die Anordnung entsprechender Armaturen kann zudem eine Steuerung aus der Ferne ermöglicht werden, um bspw. die maximale Menge der Einspeisung/Zumischung oder den Grad der Odorierung zur steuern.

Zur Gewährleistung einer hohen Netzstabilität sowie eines intelligenten Ressourcenmanagements kann es ferner von Vorteil sein, wenn ein Stromnetzüberwachungsgerät zur Überwachung eines umgebenden Stromnetzes vorgesehen ist, wobei die Sensoreinheit und/oder die Steuereinheit vorzugsweise an dem Stromnetzüberwachungsgerät angeordnet ist. Über dieses Gerät kann vorzugsweise eine notwendige Stützung des Stromnetzes (Spannung, Frequenz) erkannt werden, sodass die gegenständliche Gasdruckregel- und Messanlage netzstützend betrieben werden kann. Für eine zumindest zeitweilige "Energieautonomie" kann zudem bei Bedarf ein Gasexpander mit angekoppeltem Generator eingesetzt werden, der die notwendige Energiemenge für das Stromnetz bereitstellen kann. Zusätzlich kann eine Kopplungsmöglichkeit zu Photovoltaik und Windanlagen vorgesehen sein, um notwendige Leistungen bereitzustellen. In EE-Flauten kann zudem aus Stromspeichern und Gas-/Wasserstoffspeichern eine Energieautonomie und Schwarzstartfähigkeit abgesichert werden.

Im Hinblick auf eine besonders exakte und zuverlässige Bestimmung eines aktuellen Zustands einer Gasdruckregel- und Messanlage kann gegenständlich vorteilhafterweise vorgesehen sein, dass die Sensoreinheit zur Volumenmessung und/oder Raummessung und/oder Temperaturmessung und/oder Feuchtigkeitsmessung eingerichtet ist. So kann der Innenraum der Gasdruckregel- und Messanlage neben einem Mittel zur Temperatur- und Feuchtigkeitsmessung bspw. mit einem Raumschallsensor ausgestattet sein. Abweichungen von Temperatur und Feuchtigkeit sowie insbesondere die Überwachung des Raumschallklangbildes können Rückschlüsse auf den Betriebszustand der Anlage zulassen. Eine Feuchtigkeitserhöhung bzw. ein Temperaturabfall können bspw. bei einem Ausfall der Sensorik einer Vorwärmeanlage zusätzlich eine Information geben, ob diese Komponenten ausgefallen sind bzw. nur unzureichend funktionieren. Eine zusätzliche Installation von H₂- und/oder CH₄-Sensoren kann zudem dazu beitragen, eine etwaige Permeation und Leckagen innerhalb des Aufstellungsraums rechtzeitig zu erkennen. Über eine Einstellung von Warn- oder Alarmwerten können die vorhandenen Sensoren dabei direkt auf Eingangs- und/oder Sicherheitsabsperr-Armaturen, ggf. auch auf Stellantriebe erdverbauter Armaturen in der Eingangsleitung vor der Gasdruckregel- und Messanlage wirken. Darüber hinaus kann bei den verwendeten Gaszählern neben dem Zählwert bspw. auch der Zustand des Zählers über Körperschallsensorik erfasst werden, um mögliche Verschleißgrenzen rechtzeitig erkennen zu können. Bei Zählern mit Ölfüllung kann zudem ebenfalls der Ölfüllstand überwacht werden.

Um auch eine Funktionsprüfung der Anlage aus der Ferne zu ermöglichen, kann es zudem von Vorteil sein, wenn ein Leitungssystem vorgesehen ist, das zur Funktionsprüfung aus der Ferne eingerichtet ist, wobei das Leitungssystem hierzu vorzugsweise mit Kameras und/oder fernsteuerbaren Ventilen und/oder fernsteuerbaren Messgeräten ausgestattet ist. Damit kann neben einer intelligenten Ausführung betreffend Stellantrieben und Sensoren zur Umschaltung der Regelschienen in der Anlage (Betriebs-/Reserve-/Zählerumgangsschiene) durch eine entsprechende Ausgestaltung der Funktionsleitungen auch eine Funktionsprüfung aus der Ferne (Fließdruck, Schließdruck, SAV-Ansprechdruck etc.) ermöglicht werden. Die Ausgangsleitungen können dabei ebenso ausgestaltet sein wie die Eingangsleitungen.

Zur Gewährleistung einer hohen Produktsicherheit kann es ferner von Vorteil sein, wenn ein Dokumentations- und Archivierungsmodul zur Dokumentation und Archivierung vorgesehen ist, wobei das Dokumentations- und Archivierungsmodul vorzugsweise zusätzlich eine Datenübertragungseinheit aufweist. Das Dokumentations- und Archivierungsmodul kann bspw. kontinuierlich Messwerte aus den Sensoriken registrieren und speichern und so ermöglichen, dass die Produktsicherheit bzgl. sich ergebenden Veränderungen einer Gasbeschaffenheit sichergestellt ist. Zudem kann auf diese Weise eine eichrechtskonforme Überwachung für die Abrechnung (Einhaltung des DVGW-AB G685) garantiert werden.

Für eine bessere Einpassung der Gasdruckregel- und Messanlage in die Umgebung kann diese zumindest teilweise in das Erdreich eingelassen sein. Elektromotorische bzw. hydraulische Hebezeuge können zudem das Herausfahren der Gasdruckregel- und Messanlage über die Erdgleiche ermöglichen und somit eine einfache Inspektion, Funktionsprüfung oder Wartung ermöglichen. Bei oberirdischer Ausführung kann bspw. die gesamte Dachfläche technisch geeignet begrünt ausgebildet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zur Überwachung einer Gasdruckregel- und Messanlage,
- Fig. 2: eine schematische Darstellung einer Gasdruckregel- und Messanlage gemäß einem ersten Ausführungsbeispiel,
- Fig. 3: eine vergrößerte schematische Darstellung eines Teils einer Gasdruckregel- und Messanlage gemäß einem weiteren Ausführungsbeispiel,
- Fig. 4: eine schematische Darstellung eines erfindungsgemäß vorgesehenen Vergleiches von erfassten akustischen Daten einer Gasdruckregel- und Messanlage mit gespeicherten akustischen Daten einer Gasdruckregel- und Messanlage.

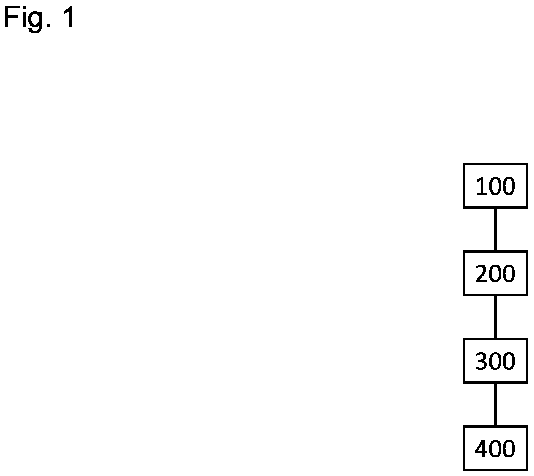

Fig. 1 zeigt eine schematische Darstellung der einzelnen Schritte eines erfindungsgemäßen Verfahrens zur Überwachung einer Gasdruckregel- und Messanlage 2 gemäß einem ersten Ausführungsbeispiel.

Hierbei umfasst das Verfahren die Schritte eines Erfassens 100 von akustischen Daten der Gasdruckregel- und Messanlage 2 mittels einer Sensoreinheit 20, eines Vergleichens 200 der erfassten akustischen Daten mit gespeicherten akustischen Daten einer Gasdruckregel- und Messanlage 2 mittels einer Verarbeitungseinheit 22, eines Bestimmens 300 eines aktuellen Zustands der Gasdruckregel- und Messanlage 2 auf Basis des Vergleiches mittels der Verarbeitungseinheit 22 sowie eines Ansteuerns 400 der Gasdruckregel- und Messanlage 2 auf Basis des bestimmten aktuellen Zustands der Gasdruckregel- und Messanlage 2 mittels einer Steuereinheit 24.

Die akustischen Daten können vorzugsweise Raumschalldaten und/oder Körperschalldaten umfassen und vor einem Vergleichen 200 mit gespeicherten akustischen Daten bearbeitet bspw. gemittelt und/oder gewichtet werden.

Das Vergleichen 200 der erfassten akustischen Daten mit gespeicherten akustischen Daten kann dabei vorzugsweise innerhalb eines ausgewählten spezifischen Frequenzbereichs erfolgen, wobei der spezifische Frequenzbereich bspw. auf Basis individueller Eigenschaften der Gasdruckregel- und Messanlage 2 ausgewählt werden kann.

Das Erfassen 100 von akustischen Daten der Gasdruckregel- und Messanlage 2 kann zudem auf bestimmte Bereiche der Gasdruckregel- und Messanlage 2 beschränkt sein.

Vorteilhafterweise kann vorgesehen sein, dass aus den erfassten akustischen Daten ein Klangbild der Gasdruckregel- und Messanlage 2 erstellt wird, das mit einem gespeicherten Klangbild derselben Gasdruckregel- und Messanlage 2 verglichen wird.

Zudem kann das Verfahren in Kombination mit der Erfassung und Bewertung von Standardparametern durchgeführt werden, wobei das Verfahren vorzugsweise bei einem Erkennen einer Abweichung eines Standardparameters von einem Sollwert initiiert werden kann.

Als Standardparameter kann dabei bspw. einer oder mehrere der folgenden Parameter erfasst und bewertet werden:
- ein Eingangsdruck eines Gases,
- ein Eingangsbrennwert eines Gases,
- eine Eingangstemperatur eines Gases,
- ein Odometriermittelgehalt eines Gases,
- eine Strömungsgeschwindigkeit eines Gases,
- eine Strömungsart eines Gases,
- ein Feuchtegehalt eines Gases
- eine Schallabstrahlung eines Gases.

Ferner kann eine Beschränkung auf bestimmte Bereiche der Gasdruckregel- und Messanlage 2 in Abhängigkeit einer Abweichung eines Standardparameters von einem Sollwert erfolgen, wobei anhand der Abweichung des Standardparameters von einem Sollwert vorab ein zu überwachender Bereich der Gasdruckregel- und Messanlage 2 bestimmt werden kann.

Das Bestimmen 300 eines aktuellen Zustandes der Gasdruckregel- und Messanlage 2 kann zudem die Verwendung von künstlicher Intelligenz umfassen.

Zudem kann vorteilhafterweise vorgesehen sein, dass die akustischen Daten über eine Glasfaserleitung und/oder eine Gas in Gas-Messsensorik erfasst werden, wobei die Glasfaserleitung vorzugsweise als Kommunikationsleitung 4 der Gasdruckregel- und Messanlage 2 dienen kann.

Die Erfassung 100 von akustischen Daten der Gasdruckregel- und Messanlage 2 kann darüber hinaus vorteilhafterweise an einem Filter 14 der Gasdruckregel- und Messanlage 2 erfolgen, wobei die Erfassung von akustischen Daten vorzugsweise gemeinsam mit der Erfassung und Bewertung von Standardparametern an dem Filter 14 der Gasdruckregel- und Messanlage 2 erfolgen kann, wobei als Standardparameter insbesondere einer oder mehrere der folgenden Parameter erfasst und bewertet werden können:
- ein Gewicht des Filters 14,
- eine Druckdifferenz zwischen einem Filtereingang und einem Filterausgang,
- eine Verformung von Filtermaterial,
- eine Feuchtigkeit am Ausgang des Filters 14.

Alternativ oder kumulativ kann die Erfassung 100 von akustischen Daten der Gasdruckregel- und Messanlage 2 an einem Regelgerät 16 der Gasdruckregel- und Messanlage 2 erfolgen, wobei die Erfassung von akustischen Daten vorzugsweise gemeinsam mit der Erfassung und Bewertung von Standardparametern an dem Regelgerät 16 der Gasdruckregel- und Messanlage 2 erfolgen kann.

Das Ansteuern 400 der Gasdruckregel- und Messanlage 2 kann schließlich vorzugsweise ein Betätigen einer Rückstellvorrichtung 8 zur Zurückstellung eines Sicherheitsabsperrventils 6 aus der Ferne umfassen.

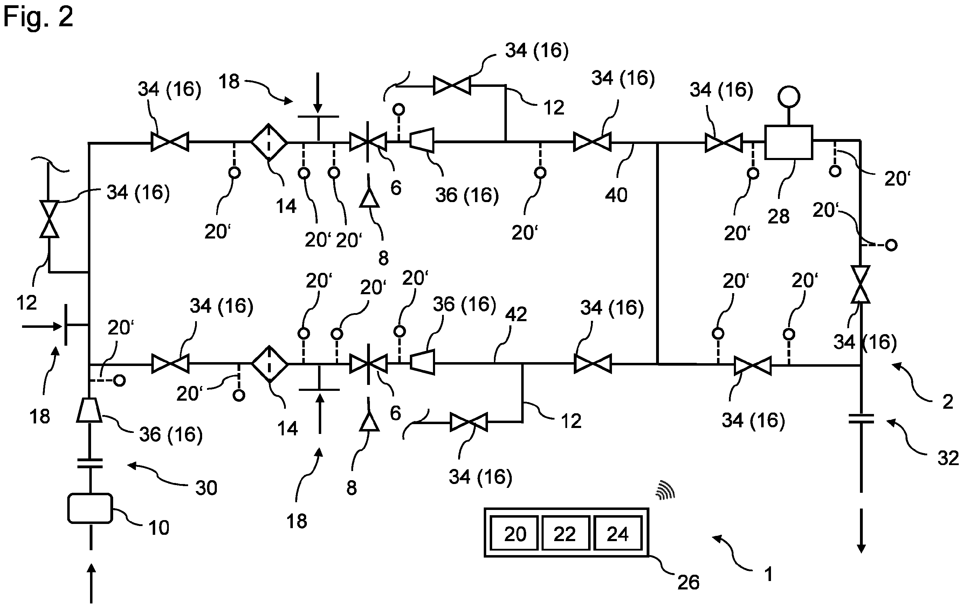

Fig. 2 zeigt eine schematische Darstellung einer Gasdruckregel- und Messanlage 2 gemäß einem ersten Ausführungsbeispiel.

Hierbei umfasst die gegenständliche Gasdruckregel- und Messanlage 2 ein System 1 zur Überwachung der Gasdruckregel- und Messanlage 2, aufweisend eine Sensoreinheit 20 zur Erfassung 100 von akustischen Daten der Gasdruckregel- und Messanlage 2, eine Verarbeitungseinheit 22 zum Vergleichen 200 der erfassten akustischen Daten mit gespeicherten akustischen Daten einer Gasdruckregel- und Messanlage 2 und zur Bestimmung 300 eines aktuellen Zustandes der Gasdruckregel- und Messanlage 2 auf Basis des Vergleiches sowie eine Steuereinheit 24 zur Ansteuerung 400 der Gasdruckregel- und Messanlage 2 auf Basis des bestimmten aktuellen Zustandes der Gasdruckregel- und Messanlage 2. Die Sensoreinheit 20, die Verarbeitungseinheit 22 und die Steuereinheit 24 sind vorliegend in einer Kontrolleinheit 26 angeordnet.

Wie gemäß Fig. 2 zu erkennen ist, umfasst die gegenständliche Gasdruckregel- und Messanlage 2 zudem eine vor einem Eingang 30 angeordnete Vorwärmanlage 10 zur Vorwärmung eines zu transportierenden Gases sowie in Form von Dosierventilen 36 gebildete Regelgeräte 16, über die das Gas entweder über eine Betriebsschiene 40 mit einem Zähler 28 oder eine Reserveschiene 42 von dem Eingang 30 zu einem Ausgang 32 überführt werden kann.

Zur Sperrung eines Gasflusses sind ferner Sicherheitsabsperrventile 6 vorgesehen, die vorliegend mit Rückstellvorrichtungen 8 zur Ansteuerung aus der Ferne versehen sind.

Zur Einführung von Mikrorobotern zur Reinigung oder zur Einführung zusätzlicher Sensoren 20` sind ferner verschiedenen Schleusen 12 vorgesehen, die jeweils mit einem Absperrventil 34 ausgestattet sind.

Zur Filterung des zu transportierenden Gases sind zudem sowohl in der Betriebsschiene 40 als auch in der Reserveschiene 42 jeweils ein Filter 14 angeordnet.

Zur selektiven Einspeisung von Wasserstoff umfasst die gegenständliche Gasdruckregel- und Messanlage 2 zudem mehrere Wasserstoff-Einspeisstellen 18.

An geeigneten Stellen der gegenständlichen Gasdruckregel- und Messanlage 2 sind darüber hinaus verschiedene Sensoren 20` der Sensoreinheit 20 zur Erfassung 100 von akustischen Daten der Gasdruckregel- und Messanlage 2 angeordnet.

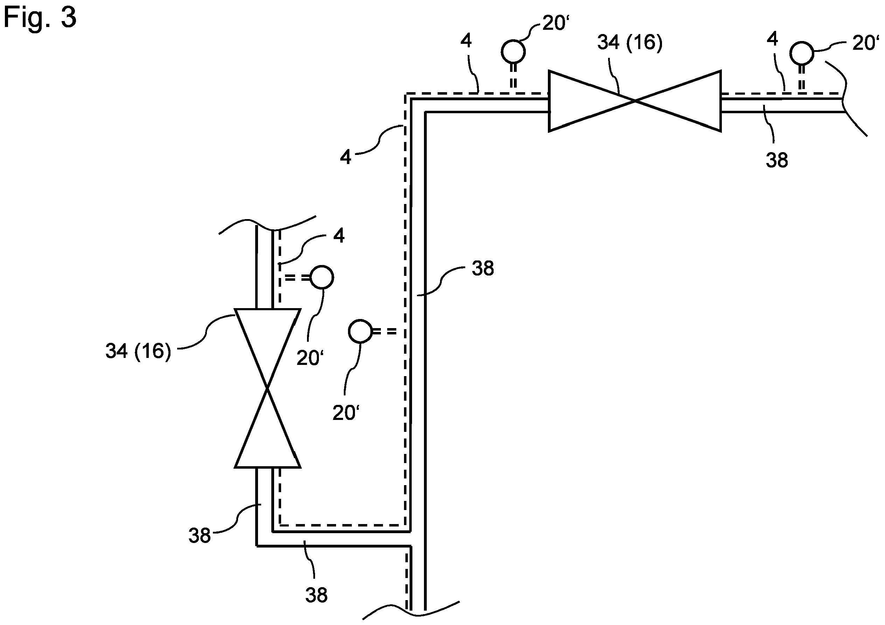

Fig. 3 zeigt eine vergrößerte schematische Darstellung eines Teils einer Gasdruckregel- und Messanlage 2 gemäß einem weiteren Ausführungsbeispiel.

Wie gemäß Fig. 3 zu erkennen ist, weist das Leitungssystem der Gasdruckregel- und Messanlage 2 gemäß dem weiteren Ausführungsbeispiel neben einer gasführenden Leitung 38 eine Kommunikationsleitung 4 zur Ausführung einer Kommunikation auf, die vorliegend in Form einer Glasfaserleitung ausgebildet ist und an die für eine empfindliche und zuverlässige Überwachung der Gasdruckregel- und Messanlage 2 Sensoren 20` zur Erfassung 100 von akustischen Daten der Gasdruckregel- und Messanlage 2 angeordnet sind.

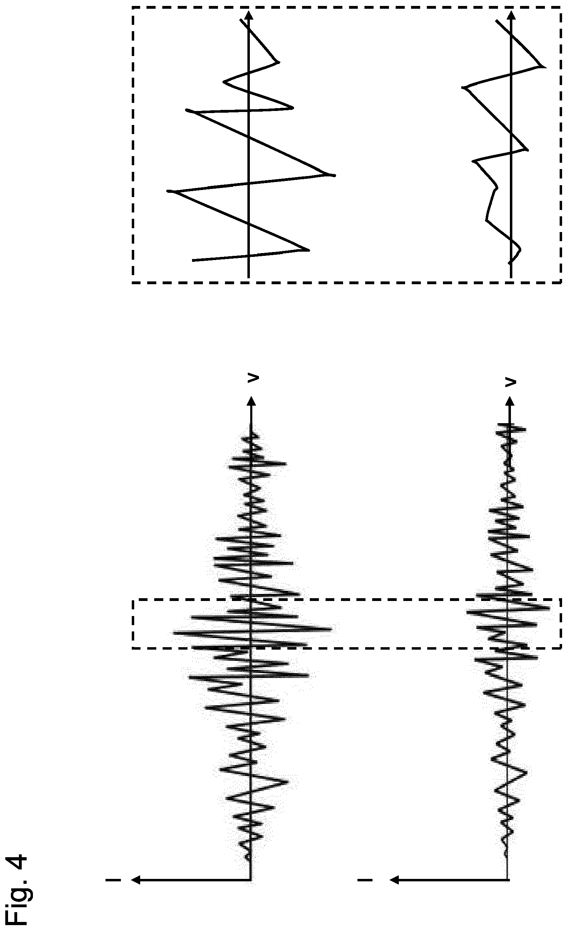

Fig. 4 zeigt eine schematische Darstellung eines erfindungsgemäß vorgesehenen Vergleiches von erfassten akustischen Daten einer Gasdruckregel- und Messanlage 2 mit gespeicherten akustischen Daten einer Gasdruckregel- und Messanlage 2.

Wie gemäß Fig. 4 zu erkennen ist, können die erfassten akustischen Daten einer Gasdruckregel- und Messanlage 2 (oberer Graph) mit den gespeicherten akustischen Daten einer Gasdruckregel- und Messanlage 2 (unterer Graph) insbesondere innerhalb eines ausgewählten spezifischen Frequenzbereichs (Fingerprintbereich) verglichen werden (gestrichelter Kasten).

Mittels des erfindungsgemäßen Verfahrens bzw. des erfindungsgemäßen Systems 1 oder der erfindungsgemäßen Gasdruckregel- und Messanlage ist es insbesondere auf Basis des vorgesehenen Vergleiches von erfassten akustischen Daten einer Gasdruckregel- und Messanlage 2 mit gespeicherten akustischen Daten einer Gasdruckregel- und Messanlage 2 möglich, einen sicheren und nachhaltigen und zugleich unaufwändigen und kostengünstigen Betrieb einer Gasdruckregel- und Messanlage 2 zu gewährleisten.

### Bezugszeichenliste

- 1: System zur Überwachung einer Gasdruckregel- und Messanlage
- 2: Gasdruckregel- und Messanlage
- 4: Kommunikationsleitung
- 6: Sicherheitsabsperrventil
- 8: Rückstellvorrichtung
- 10: Vorwärmanlage
- 12: Schleuse
- 14: Filter
- 16: Regelgerät
- 18: Wasserstoff-Einspeisstelle
- 20: Sensoreinheit
- 20`: Sensoren
- 22: Verarbeitungseinheit
- 24: Steuereinheit
- 26: Kontrolleinheit
- 28: Zähler
- 30: Eingang
- 32: Ausgang
- 34: Absperrventil
- 36: Dosierventil
- 38: gasführende Leitung
- 40: Betriebsschiene
- 42: Reserveschiene

- 100: Erfassen von akustischen Daten der Gasdruckregel- und Messanlage
- 200: Vergleichen der erfassten akustischen Daten mit gespeicherten akustischen Daten einer Gasdruckregel- und Messanlage
- 300: Bestimmen eines aktuellen Zustandes der Gasdruckregel- und Messanlage
- 400: Ansteuern der Gasdruckregel- und Messanlage

## Patentansprüche

1. Verfahren zur Überwachung einer Gasdruckregel- und Messanlage (2), umfassend die Schritte:
- Erfassen (100) von akustischen Daten der Gasdruckregel- und Messanlage (2) mittels einer Sensoreinheit (20),
- Vergleichen (200) der erfassten akustischen Daten mit gespeicherten akustischen Daten einer Gasdruckregel- und Messanlage (2) mittels einer Verarbeitungseinheit (22),
- Bestimmen (300) eines aktuellen Zustandes der Gasdruckregel- und Messanlage (2) auf Basis des Vergleiches mittels der Verarbeitungseinheit (22).

2. Verfahren nach Anspruch 1,
**dadurch gekennzeichnet,**
**dass** die akustischen Daten Raumschalldaten und/oder Körperschalldaten umfassen und/oder
**dass** die erfassten akustischen Daten vor einem Vergleichen (200) mit gespeicherten akustischen Daten bearbeitet werden, wobei die Datenbearbeitung vorzugsweise zumindest ein Mitteln und/oder Gewichten der erfassten akustischen Daten umfasst.

3. Verfahren nach einem der vorangehenden Ansprüche,
**dadurch gekennzeichnet,**
**dass** das Vergleichen (200) der erfassten akustischen Daten mit gespeicherten akustischen Daten innerhalb eines ausgewählten spezifischen Frequenzbereichs erfolgt, und/oder, dass das Erfassen (100) von akustischen Daten der Gasdruckregel- und Messanlage (2) auf bestimmte Bereiche der der Gasdruckregel- und Messanlage (2) beschränkt wird, wobei der spezifische Frequenzbereich vorzugsweise auf Basis individueller Eigenschaften der Gasdruckregel- und Messanlage (2) ausgewählt wird.

4. Verfahren nach einem der vorangehenden Ansprüche,
**dadurch gekennzeichnet,**
**dass** aus den erfassten akustischen Daten ein Klangbild der Gasdruckregel- und Messanlage (2) erstellt wird, das mit einem gespeicherten Klangbild derselben Gasdruckregel- und Messanlage (2) verglichen wird, und/oder dass das Verfahren in Kombination mit der Erfassung und Bewertung von Standardparametern durchgeführt wird, wobei das Verfahren vorzugsweise bei einem Erkennen einer Abweichung eines Standardparameters von einem Sollwert initiiert wird, insbesondere dass als Standardparameter einer oder mehrere der folgenden Parameter erfasst und bewertet werden:
- ein Eingangsdruck eines Gases,
- ein Eingangsbrennwert eines Gases,
- eine Eingangstemperatur eines Gases,
- ein Odometriermittelgehalt eines Gases,
- eine Strömungsgeschwindigkeit eines Gases,
- eine Strömungsart eines Gases,
- ein Feuchtegehalt eines Gases
- eine Schallabstrahlung eines Gases.

5. Verfahren nach einem der vorangehenden Ansprüche,
**dadurch gekennzeichnet,**
**dass** eine Beschränkung auf bestimmte Bereiche der Gasdruckregel- und Messanlage (2) in Abhängigkeit einer Abweichung eines Standardparameters von einem Sollwert erfolgt, wobei anhand der Abweichung des Standardparameters von einem Sollwert vorab ein zu überwachender Bereich der Gasdruckregel- und Messanlage (2) bestimmt wird.

6. Verfahren nach einem der vorangehenden Ansprüche,
**dadurch gekennzeichnet,**
**dass** die akustischen Daten über eine Glasfaserleitung und/oder eine Glas in Gas-Messsensorik erfasst werden, wobei die Glasfaserleitung vorzugsweise als Kommunikationsleitung (4) der Gasdruckregel- und Messanlage (2) dient.

7. Verfahren nach einem der vorangehenden Ansprüche,
**dadurch gekennzeichnet,**
**dass** die Erfassung (100) von akustischen Daten der Gasdruckregel- und Messanlage (2) an einem Filter (14) der Gasdruckregel- und Messanlage (2) erfolgt, wobei die Erfassung von akustischen Daten vorzugsweise gemeinsam mit der Erfassung und Bewertung von Standardparametern an dem Filter (14) der Gasdruckregel- und Messanlage (2) erfolgt, wobei als Standardparameter insbesondere einer oder mehrere der folgenden Parameter erfasst und bewertet werden:
- ein Gewicht des Filters (14),
- eine Druckdifferenz zwischen einem Filtereingang und einem Filterausgang,
- eine Verformung von Filtermaterial,
- eine Feuchtigkeit am Ausgang des Filters (14).

8. Verfahren nach einem der vorangehenden Ansprüche,
**dadurch gekennzeichnet,**
**dass** die Erfassung (100) von akustischen Daten der Gasdruckregel- und Messanlage (2) an einem Regelgerät (16) der Gasdruckregel- und Messanlage (2) erfolgt, wobei die Erfassung von akustischen Daten vorzugsweise gemeinsam mit der Erfassung und Bewertung von Standardparametern an dem Regelgerät (16) der Gasdruckregel- und Messanlage (2) erfolgt, wobei als Standardparameter insbesondere einer oder mehrere der folgenden Parameter erfasst und bewertet werden:
- ein Körperschall,
- ein Druckstoß oder Druckabfall,
- eine Membranschwingung,
- eine Membranbewegung,
- ein Hilfsdruck.

9. Verfahren nach einem der vorangehenden Ansprüche,
**dadurch gekennzeichnet,**
**dass** ein Ansteuern (400) der Gasdruckregel- und Messanlage (2) auf Basis des bestimmten aktuellen Zustandes der Gasdruckregel- und Messanlage (2) mittels einer Steuereinheit (24) vorgesehen ist, wobei das Ansteuern (400) vorzugsweise ein Betätigen einer Rückstellvorrichtung (8) zur Zurückstellung eines Sicherheitsabsperrventils (6) aus der Ferne umfasst.

10. System (1) zur Überwachung einer Gasdruckregel- und Messanlage (2), insbesondere zur Ausführung eines Verfahrens nach einem der voranstehenden Ansprüche, umfassend:
- eine Sensoreinheit (20) zur Erfassung (100) von akustischen Daten der Gasdruckregel- und Messanlage (2),
- eine Verarbeitungseinheit (22) zum Vergleichen (200) der erfassten akustischen Daten mit gespeicherten akustischen Daten einer Gasdruckregel- und Messanlage (2) und zur Bestimmung (300) eines aktuellen Zustandes der Gasdruckregel- und Messanlage (2) auf Basis des Vergleiches.

11. System (1) nach Anspruch 10,
**dadurch gekennzeichnet,**
**dass** die Sensoreinheit (20) zusätzlich zur Erfassung und Bewertung von Standardparametern eingerichtet ist und/oder
**dass** eine Steuereinheit (24) zur Ansteuerung (400) der Gasdruckregel- und Messanlage (2) auf Basis des bestimmten aktuellen Zustandes der Gasdruckregel- und Messanlage (2) vorgesehen ist.

12. Gasdruckregel- und Messanlage (2), aufweisend ein System nach einem der Ansprüche 10 bis 11.

13. Gasdruckregel- und Messanlage (2) nach Anspruch 12,
**dadurch gekennzeichnet,**
**dass** eine Kommunikationsleitung (4) zur Ausführung einer Kommunikation vorgesehen ist, wobei die Sensoreinheit (20) vorzugsweise an der Kommunikationsleitung (4) angeordnet ist, wobei die Kommunikationsleitung (4) insbesondere in Form einer Glasfaserleitung ausgebildet ist, und/oder dass zumindest ein Sicherheitsabsperrventil (6) zur Sperrung eines Gasflusses und eine Rückstellvorrichtung (8) zur Ansteuerung des zumindest einen Sicherheitsabsperrventils (6) aus der Ferne vorgesehen ist, wobei die Steuereinheit (24) vorzugsweise mit der Rückstellvorrichtung (8) in Kommunikationsverbindung steht.

14. Gasdruckregel- und Messanlage (2) nach einem der Ansprüche 12 bis 13,
**dadurch gekennzeichnet,**
**dass** eine Vorwärmanlage (10) zur Vorwärmung eines Gases vorgesehen ist, wobei die Sensoreinheit (20) vorzugsweise an der Vorwärmanlage (10) angeordnet ist und/oder die Steuereinheit (24) mit der Vorwärmanlage (10) in Kommunikationsverbindung steht, und/oder dass Schleusen (12) zur Einführung von Mikrorobotern zur Reinigung oder zur Einführung von Sensoren (20`) vorgesehen sind.

15. Gasdruckregel- und Messanlage (2) nach einem der Ansprüche 12 bis 14,
**dadurch gekennzeichnet,**
**dass** ein Filter (14) zur Filterung eines Gases und/oder Regelgeräte (16) zur Regelung eines Gasflusses vorgesehen sind, wobei die Sensoreinheit (20) vorzugsweise an dem Filter (14) und/oder den Regelgeräten (16) angeordnet ist und/oder,
**dass** zumindest eine Wasserstoff-Einspeisstelle (18) vorgesehen ist, wobei die Sensoreinheit (20) und/oder die Steuereinheit (24) vorzugsweise an der Wasserstoff-Einspeisstelle (18) angeordnet ist.

16. Gasdruckregel- und Messanlage (2) nach einem der Ansprüche 12 bis 15,
**dadurch gekennzeichnet,**
**dass** ein Stromnetzüberwachungsgerät zur Überwachung eines umgebenden Stromnetzes vorgesehen ist, und/oder, dass die Sensoreinheit (20) zur Volumenmessung und/oder Raummessung und/oder Temperaturmessung und/oder Feuchtigkeitsmessung eingerichtet ist, wobei die Sensoreinheit (20) und/oder die Steuereinheit (24) vorzugsweise an dem Stromnetzüberwachungsgerät angeordnet ist.

17. Gasdruckregel- und Messanlage (2) nach einem der Ansprüche 12 bis 16,
**dadurch gekennzeichnet,**
**dass** ein Leitungssystem vorgesehen ist, das zur Funktionsprüfung aus der Ferne eingerichtet ist, wobei das Leitungssystem vorzugsweise mit Kameras und/oder fernsteuerbaren Ventilen und/oder fernsteuerbaren Messgeräten ausgestattet ist.

18. Gasdruckregel- und Messanlage (2) nach einem der Ansprüche 12 bis 17,
**dadurch gekennzeichnet,**
**dass** ein Dokumentations- und Archivierungsmodul zur Dokumentation und Archivierung vorgesehen ist, und/oder dass die Gasdruckregel- und Messanlage (2) zumindest teilweise in das Erdreich eingelassen ist, wobei das Dokumentations- und Archivierungsmodul vorzugsweise zusätzlich eine Datenübertragungseinheit aufweist.
